# FASCICULE DE BREVET EUROPEEN

(11) **EP 2 439 808 B1**
(45) Date de publication et mention de la délivrance du brevet: **29.05.2013**
(21) Numéro de dépôt: 11183654.0
(22) Date de dépôt: 03.10.2011
(51) Int. Cl.: H01M 2/20, H01M 2/34, H01M 2/10, H01M 2/30

(54) **Dispositif de connexion électrique de modules d'accumulateurs d'une batterie**
Vorrichtung zum elektrischen Anschluss von Batteriemodulen
Device for the electrical connection of battery modules

(30) Priorité: 05.10.2010 FR 1058070
(43) Date de publication de la demande: 11.04.2012
(73) Titulaire: SAFT, 93170 Bagnolet (FR)
(72) Inventeur: Guidal, Laurent, 86190 Latille (FR); Rochard, Damien, 86800 Sèvres-Anxaumont (FR); Susset, Pascal, 86340 Nieuil l'Espoir (FR)
(74) Mandataire: Hirsch & Associés

(56) Documents cités:
- WO-A2-2005/120151
- WO-A2-2007/027603
- US-A1- 2006 208 698

## Description

La présente invention se rapporte à un dispositif de connexion pour relier électriquement en série au moins deux modules d'accumulateurs d'une batterie ; ainsi qu'à un procédé de connexion utilisant un tel dispositif.

Typiquement une batterie comprend une pluralité d'accumulateurs appelés aussi générateurs électrochimiques, cellules ou éléments. Un accumulateur est un dispositif de production d'électricité dans lequel de l'énergie chimique est convertie en énergie électrique. L'énergie chimique est constituée par des composés électrochimiquement actifs déposés sur au moins une face d'électrodes disposées dans l'accumulateur. L'énergie électrique est produite par des réactions électrochimiques au cours d'une décharge de l'accumulateur. Les électrodes, disposées dans un conteneur, sont connectées électriquement à des bornes de sortie de courant qui assurent une continuité électrique entre les électrodes et un consommateur électrique auquel l'accumulateur est associé.

Une batterie peut être divisée en modules, chaque module étant composé d'une pluralité d'accumulateurs reliés entre eux en série et/ou en parallèle. La batterie est destinée à fournir de l'énergie électrique à une application extérieure. Un circuit de charge est généralement prévu auquel la batterie peut être branchée pour recharger les accumulateurs. La batterie peut comporter une ou plusieurs branches parallèles de modules reliés en série, chaque module comprenant une ou plusieurs branches parallèles d'accumulateurs reliés en série.

Les connexions électriques - série ou parallèle - entre accumulateurs dans un module peuvent être assurées par un ensemble mécanique appelé "busbar". Un busbar se compose typiquement de barrettes de forte section assurant la connexion de puissance entre les bornes de sortie de courant des accumulateurs. Des busbar sont par exemple utilisés dans les batteries commercialisées par le demandeur sous la référence 750046 et intégrant un ensemble busbar de référence 750762. Les barrettes de connexion sont généralement assemblées par vissage, brasage ou soudage sur les bornes des accumulateurs. Le document EP-A-2 093 819 décrit un module de batterie dans lequel les accumulateurs sont reliés par busbar.

WO 2007/027603 A décrit des modules de batterie et un procédé pour les connecter. Chaque module possède un connecteur mâle et un connecteur femelle, isolés, et chaque connecteur mâle d'un module est adapté pour être connecté au connecteur femelle du module adjacent. Le but étant d'assembler une batterie de forte puissance de façon sécurisée.

Les connexions électriques - série ou parallèle - entre modules et vers les connecteurs de puissance de la batterie peuvent être assurées par des busbar rigides et/ou par câbles. Les câbles ou busbar sont généralement posés et connectés par vissage aux bornes des modules.

Pour certaines applications de très fortes puissances, ce type de connexion par câble et/ou busbar n'est pas bien adapté. Notamment, la connexion par busbar et/ou par câbles pour relier des modules en série n'est pas sécurisée lorsque chaque module comprend plusieurs accumulateurs Li-ion reliés en série. En effet, un accumulateur de type Li-ion présente une tension non nulle à ses bornes même à l'état déchargé (de l'ordre de 3V). Ainsi, la tension aux bornes d'un module peut atteindre plusieurs dizaines de volts et la mise en série de plusieurs modules peut conduire à une tension de plusieurs centaines de volts aux bornes de la batterie. Pour le branchement du câble de retour, il est nécessaire d'utiliser des outillages spécifiques et de confier cette tâche à un technicien habilité.

En outre, pour certaines applications de très fortes puissances, les différents modules de la batterie peuvent être transportés séparément et la batterie est alors assemblée chez le client à proximité du consommateur électrique auquel elle est destinée. La mise en série des modules nécessite alors le déplacement d'un technicien habilité.

Par ailleurs, la maintenance d'une telle batterie est délicate car le démontage des modules crée un risque d'électrisation. Des outils spécifiques doivent être créés, tels que des clés dynamométrique pour le serrage des connexions et des protections pour le détrompage de connexions.

De plus, les connexions par câble et/ou busbar sont encombrantes et très dépendantes des couples de serrage et de la qualité des surfaces de contact qui peuvent être altérés par des vibrations lors du transport ou du service de la batterie provoquant ainsi une augmentation de la résistance ohmique de la batterie.

Le but de la présente invention est de fournir un dispositif de connexion permettant de pallier au moins partiellement les inconvénients précités.

Notamment, il existe un besoin pour un dispositif de connexion de modules en série qui soit fiable et sécurisé quel que soit le nombre de modules à connecter et leur puissance.

A cette fin, la présente invention propose un dispositif de connexion pour relier électriquement en série au moins deux modules d'accumulateurs d'une batterie, comprenant :
- au moins une broche de connexion creuse adaptée à relier électriquement deux modules adjacents en série et définissant un passage recouvert d'un isolant ;
- une tige de connexion adaptée à traverser le passage de ladite au moins une broche de connexion creuse et adaptée à relier électriquement une borne de sortie de courant d'une première polarité d'un premier module à une borne de sortie de courant de la même polarité de la batterie.

Selon les modes de réalisation, le dispositif de connexion peut comprendre en outre une ou plusieurs des caractéristiques suivantes :
- l'isolant de la broche de connexion creuse déborde aux extrémités de la broche de connexion creuse et recouvre un anneau périphérique extérieur de la broche de connexion creuse ;
- l'isolant de la broche de connexion creuse est une pièce isolante assemblée à la broche de connexion creuse ;
- l'isolant de la broche de connexion creuse est une couche isolante appliquée dans le passage de la broche de connexion creuse ;
- la tige de connexion est recouverte d'un isolant ;
- l'isolant de la tige de connexion est d'une composition différente de l'isolant de la broche de connexion creuse ;
- l'isolant de la tige de connexion est une pièce isolante assemblée à la tige de connexion ;
- l'isolant de la tige de connexion est une couche isolante appliquée sur la tige de connexion ;
- le dispositif de connexion comprend en outre une pièce de collecte de courant associée à chaque extrémité de la broche de connexion creuse, chaque pièce de collecte de courant étant adaptée à collecter le courant depuis une borne de sortie de courant d'au moins un accumulateur ;
- la pièce de collecte de courant présente une bague en contact avec une portion conductrice de la broche de connexion creuse et au moins une branche adaptée à contacter électriquement une borne de sortie de courant d'un accumulateur ;
- la tige de connexion est munie d'une zone de préhension isolante à une de ses extrémités ;
- la zone de préhension comprend un détrompeur ;
- le dispositif de connexion comprend en outre une pièce de liaison présentant une bague en contact électrique avec une portion conductrice de la tige de connexion, une plaque de support en contact électrique avec la bague, et au moins un connecteur de puissance agencé sur et électriquement relié à la plaque de support.

La présente invention concerne aussi une batterie comprenant au moins deux modules d'accumulateurs et un dispositif de connexion selon l'invention. Chaque module de la batterie peut comprendre une pluralité d'accumulateurs reliés en série et/ou en parallèle.

La présente invention concerne en outre un procédé de connexion électrique d'au moins deux modules d'accumulateurs d'une batterie, le procédé comprenant les étapes consistant à :
- agencer au moins une broche de connexion creuse entre deux modules adjacents, la broche creuse définissant un passage ;
- relier électriquement une première extrémité de la broche creuse à une borne de sortie de courant d'une première polarité d'un premier module ;
- relier électriquement la seconde extrémité de la broche creuse à une borne de sortie de courant de la deuxième polarité du module adjacent ;
- introduire une tige de connexion dans le passage de ladite au moins une broche de connexion creuse ;
- relier électriquement une première extrémité de la tige de connexion à une borne de sortie de courant de la deuxième polarité du premier module.

Selon un mode de réalisation, la tige de connexion est introduite en aveugle dans la broche de connexion creuse.

Selon un mode de réalisation, l'étape consistant à relier électriquement la première extrémité de la tige de connexion comprend la mise en butée de ladite extrémité dans une pièce de connexion électriquement reliée à la borne de sortie de courant du premier module.

D'autres caractéristiques et avantages de l'invention apparaîtront à la lecture de la description qui suit d'un mode de réalisation préféré de l'invention, donnée à titre d'exemple et en référence aux dessins annexés qui représentent :
- figure 1, un schéma du dispositif de connexion selon un mode de réalisation de l'invention ;
- figure 2, une vue schématique partielle du dispositif de connexion de l'invention ;
- figure 3, une vue en perspective d'une partie du dispositif de connexion de l'invention ;
- figure 4, une vue partielle de la connexion entre accumulateurs pour sept modules reliés en série par un dispositif selon l'invention ;
- figure 5, une vue en perspective de deux modules préparés pour être reliés en série par un dispositif selon l'invention.

L'invention vise à fournir un dispositif de connexion qui permette de mettre en contact électrique deux pièces de connexion, sans outil, sans organe de fixation, sans augmentation de la résistance et cela en aveugle et en toute sécurité.

A cette fin, l'invention propose d'utiliser un premier type de connexion pour relier électriquement en série deux modules adjacents et un deuxième type de connexion pour assurer le retour du courant. Le premier type de connexion est une broche creuse qui définit un passage recouvert d'un isolant ; le deuxième type de connexion est une tige adaptée à traverser une ou plusieurs broches creuses.

Le dispositif de connexion selon l'invention convient à tout type de batterie, quel que soit le nombre de modules à relier en série ; le nombre de broches creuses étant adapté au nombre de modules à relier et la longueur de la tige de connexion étant adaptée au nombre et au format des modules à relier.

Le dispositif de connexion selon l'invention est sécuritaire ; la connexion du retour de courant se fait par introduction de la tige de connexion qui est guidée par les passages isolés des broches creuses. La mise en connexion peut être réalisée sans outils spécifiques ; les fixations des broches creuses sont réalisées hors tension et la mise en place de la tige de connexion - qui ferme le circuit électrique - peut se faire par simple mise en contact de l'extrémité de la tige dans une pièce de connexion préalablement fixée.

Le dispositif de connexion selon l'invention va maintenant être décrit plus en détails selon un mode de réalisation et en référence aux figures annexées.

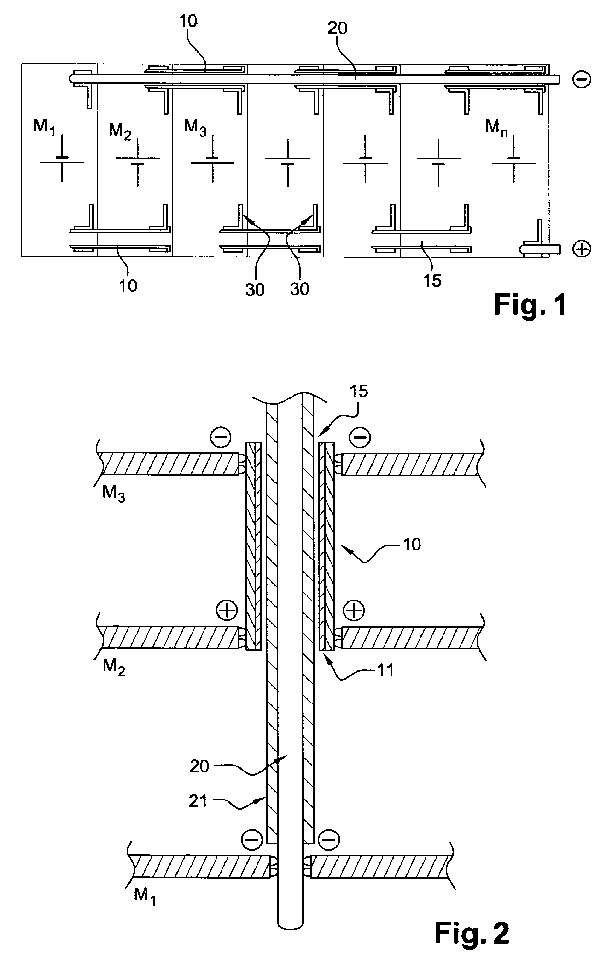

La figure 1 montre un exemple d'utilisation d'un dispositif selon l'invention pour une batterie avec sept modules reliés en série. Chaque module M₁, M₂, M₃, ... Mₙ, est illustré comme un générateur élémentaire avec une borne de sortie de courant positive et une borne de sortie de courant négative. De manière connue en soi, chaque module peut néanmoins comprendre une pluralité d'accumulateurs reliés en série et/ou en parallèle. Les bornes de sortie de courant des modules Mₙ sont reliées en série à des bornes de sortie de courant de la batterie.

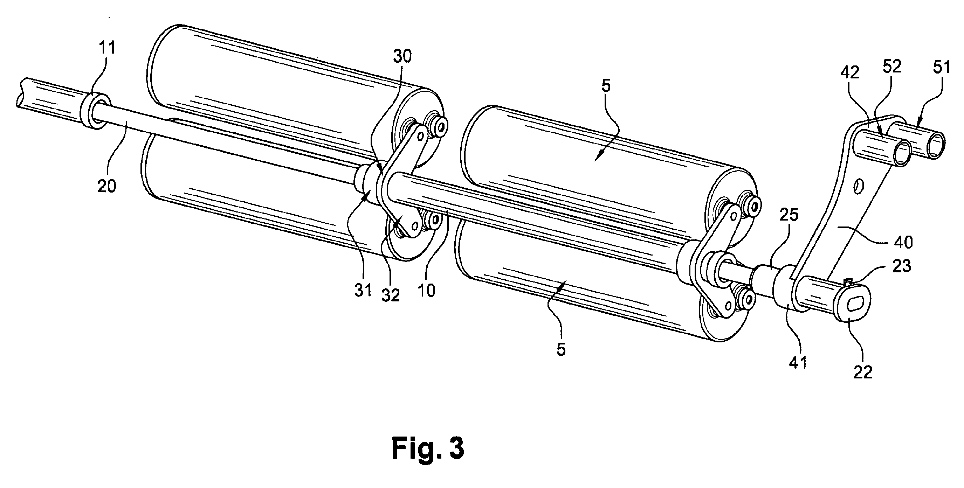

La figure 1 montre une pluralité de broches creuses 10. Chaque broche creuse 10 relie électriquement deux modules adjacents et définit un passage 15. La figure 1 montre aussi une tige de connexion 20 traversant les passages de certaines broches creuses 10 pour aller connecter une borne d'une première polarité - borne négative dans l'exemple de la figure 1 - à la borne de sortie de courant de la même polarité de la batterie. La figure 1 montre aussi des pièces de collecte de courant 30 aux extrémités des broches creuses 10. Ces pièces de collecte de courants 30 seront décrites plus en détails en référence à la figure 3 ; elles sont adaptées à collecter le courant du module depuis une borne de sortie de courant d'au moins un accumulateur.

La figure 2 montre avec plus de détails une broche creuse 10 et la tige de connexion 20 traversant le passage 15 de la broche creuse 10 et venant contacter les bornes de sortie de courant de deux accumulateurs d'un premier module M₁. La broche creuse 10 relie électriquement en série des deuxième et troisième modules M₂, M₃, étant entendu qu'une autre broche creuse (non illustrée) relie électriquement en série le premier module M₁ au deuxième module M₂.

On voit sur la figure 2 un isolant 11 recouvrant le passage 15 de la broche creuse 10 - c'est-à-dire recouvrant la surface interne de la broche. L'isolant 11 recouvrant le passage 15 de la broche creuse 10 peut être une pièce en matériau isolant sertie ou collée à la broche creuse ; l'isolant 11 peut aussi être une couche isolante telle qu'une peinture ou un vernis appliquée sur le passage de la broche creuse. L'isolant 11 de la broche creuse 10 permet d'introduire la tige de connexion 20 dans le passage 15 sans risque de court-circuit.

La figure 2 montre aussi un isolant 21 recouvrant la tige de connexion 20, sauf en son extrémité où elle doit établir un contact électrique avec le premier module M₁. L'isolant 21 de la tige de connexion 20 peut être une couche isolante appliquée sur la tige ou une pièce isolante encerclant la tige. L'isolante 21 de la tige de connexion 20 permet de respecter le principe de la double isolation et ainsi d'augmenter la sécurité lors de l'introduction de la tige de connexion 20 dans le passage 15 de la broche creuse 10. En effet, si l'une des pièces ou couches isolantes est abîmée ou défaillante, l'autre préviendra tout risque de court-circuit. Notamment, dans certaines applications, la différence de potentiel électrique entre la tige 20 et une broche 10 peut atteindre 600 V, voir davantage. A cet égard, on choisira de préférence des isolants 11, 21 de compositions différentes pour éviter toute défaillance systématique.

La broche creuse 10 est en matériau conducteur électrique, typiquement du cuivre ou de l'aluminium, et l'isolant 11 de la broche peut être du verre époxy ou du Noryl. A titre d'exemple, le diamètre interne de la broche creuse 10 peut être de l'ordre de 15 mm et l'épaisseur de la paroi conductrice de la broche creuse 10 peut être de l'ordre de 2 mm ; de telles dimensions permettent le passage de courants forts (plusieurs centaines d'ampères, par exemple 600-800 A). L'épaisseur de l'isolant 11 recouvrant le passage de la broche creuse peut être de l'ordre de 1 mm.

La tige de connexion 20 est en matériau conducteur électrique, typiquement du cuivre ou de l'aluminium, et l'isolant 21 de la tige peut être du verre époxy ou du Noryl. A titre d'exemple, le diamètre de la portion conductrice de la tige de connexion 20 peut être de l'ordre de 12 mm, permettant le passage de courants forts (plusieurs centaines d'ampères, par exemple 600-800 A) et l'épaisseur de l'isolant 21 recouvrant la tige 20 peut être de l'ordre de 0.5 mm. Il est bien entendu que les dimensions et matériaux indiqués ci-dessus peuvent être modifiés pour s'adapter aux valeurs d'intensité de courant requises.

La figure 3 montre une partie du dispositif de connexion de l'invention avec deux modules reliés en série. Sur la figure 3, seuls deux accumulateurs 5 sont représentés pour chaque module, mais il est entendu que chaque module peut comprendre davantage d'accumulateurs.

La figure 3 montre une partie de la tige de connexion 20 traversant une première broche creuse 10 et pénétrant dans une deuxième broche creuse. Sur la figure 3, on a illustré une pièce isolante 11 débordant aux extrémités de la broche creuse 10 et se terminant par un anneau périphérique extérieur encerclant une extrémité de la broche creuse. Cet anneau de la pièce isolante 11 augmente encore la sécurité du dispositif de connexion selon l'invention. En effet, lorsque la tige de connexion 20 est insérée dans les broches creuses 10, elle peut buter contre une extrémité d'une broche creuse 10 au lieu de pénétrer directement dans le passage de la broche. Si la tranche de la broche creuse 10 n'est pas complètement isolée, un court-circuit peut avoir lieu.

La figure 3 montre aussi des pièces de collecte de courant 30 constituées de pièces métalliques adaptées à collecter le courant depuis une borne de sortie de courant d'au moins un accumulateur 5 vers une broche creuse 10. On peut prévoir une pièce de collecte de courant 30 à chaque extrémité de chaque broche creuse 10. Chaque pièce de collecte de courant 30 peut présenter une bague 31 en contact avec une portion conductrice de la broche creuse 10 et au moins une branche 32 adaptée à contacter électriquement une borne de sortie de courant d'un accumulateur 5. La pièce de collecte de courant 30 peut être une pièce monobloc conformée avec une portion de bague 31 et une portion de branche 32 ; la pièce de collecte de courant 30 peut aussi être composée de plusieurs pièces - une bague 31 et une pièce constituant la ou les branches 32 - assemblées par sertissage par exemple. La bague 31 peut alors intégrer des contacts flexibles, à fils ou à lamelles, permettant d'établir un contact électrique sans vissage ni soudure avec la pièce constituant la ou les branches 32.

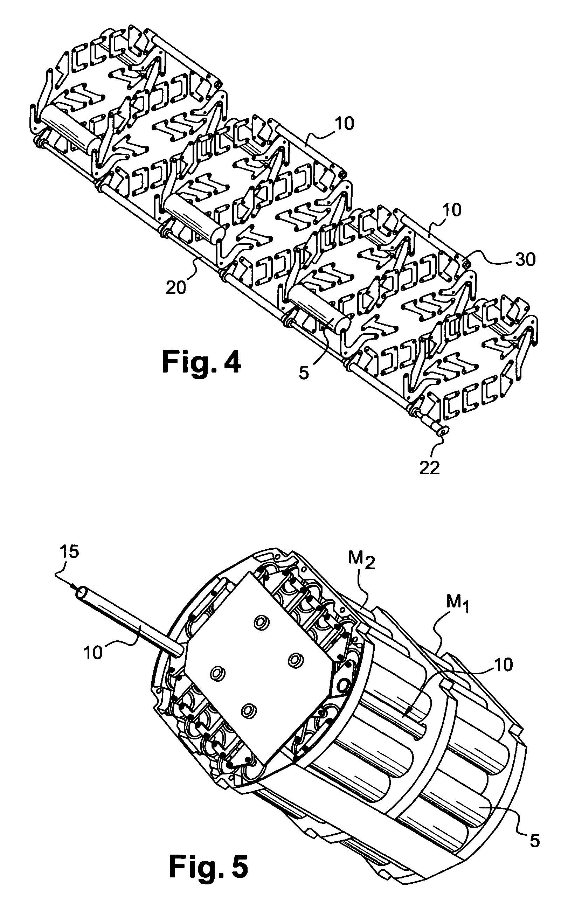

Le contact électrique entre la bague 31 et la broche creuse 10 peut être assuré par un systèmes de fils ou lamelles élastiques, par exemple juste à côté de l'anneau de la couche isolante 11, ou par mise en butée de la broche 10 entre des socles de busbar sur lesquels sont agencées les pièces de collecte de courant (voir figure 5). Le contact électrique entre une branche 32 et une borne de sortie de courant d'un accumulateur 5 peut être assuré par vissage ou soudure, mais également par des contacts flexibles, à fils ou à lamelles.

Sur la figure 3, la pièce de collecte de courant 30 présente deux branches 32 pour connecter en série deux branches parallèles d'accumulateurs, mais il est entendu qu'une telle pièce de collecte de courant 30 pourrait ne présenter qu'une seule branche ou plus que deux branches selon le nombre de branches parallèles d'accumulateurs à relier en série dans la batterie.

La figure 3 montre aussi une zone de préhension isolante 22 à l'une des extrémités de la tige de connexion 20. Cette zone de préhension permet à un technicien de tenir la tige de connexion 20 de manière parfaitement sécurisée pendant son introduction dans les broches creuses 10. La zone de préhension 22 peut être en plastique par exemple ; elle peut s'étendre sur une dizaine de centimètres à l'extrémité de la tige de connexion 20. La zone de préhension 22 peut être munie d'un détrompeur 23 afin d'assister le technicien lors de la mise en connexion. Par exemple, l'insertion du détrompeur 23 dans un évidement du boîtier de la batterie peut indiquer au technicien que l'extrémité de la tige de connexion 20 est bien en butée sur une pièce de connexion électriquement reliée à la borne de sortie de courant du premier module ; le circuit de courant étant alors fermé et les différents modules mis en série dans la batterie.

La figure 3 montre également une pièce de liaison 40 entre l'extrémité de la tige de connexion 20 et des connecteurs de puissance 51, 52 de la batterie. De fait, la tige de connexion 20 est destinée à relier électriquement la borne de sortie de courant d'une première polarité d'un premier module M₁ à la borne de sortie de courant de la même polarité de la batterie (comme cela a été décrit en référence à la figure 1 notamment). Une première extrémité de la tige de connexion 20 est donc introduite dans les broches creuses 10 jusqu'à venir buter contre une pièce de connexion électriquement reliée à la borne de sortie de courant du premier module M₁ (en référence à la figure 1). L'autre extrémité de la tige de connexion 20 doit donc être reliée électriquement à des bornes de sortie de courant de la même polarité de la batterie. A cet effet, une pièce de liaison 40 peut être prévue.

La pièce illustrée sur la figure 3 n'est qu'un exemple ; d'autres formes ou agencements peuvent être envisagés pour assurer cette liaison électrique. Notamment la pièce de liaison 40 peut être monobloc et conformée avec une portion de bague 41, une portion de plaque 42 et une portion de connecteurs de puissance 51, 52 ; mais il est entendu que la pièce de liaison 40 pourrait être composée de plusieurs pièces assemblées et que le nombre de connecteurs de puissances pour une même polarité dépend du cahier des charges fixé par le client de l'application à laquelle la batterie est destinée.

Sur la figure 3, la pièce de liaison 40 comprend une bague 41 en contact avec une portion conductrice 25 de la tige de connexion 20. Par exemple, la bague 41 de la pièce de liaison 40 peut être sertie, soudée, ou mise en contact par l'intermédiaire de fils ou de lamelles à la tige de connexion 20 entre la zone de préhension 22 en plastique et la zone recouverte d'isolant 21. Dans un mode de réalisation, la pièce de liaison 40 peut être montée dans le boîtier de la batterie avant insertion de la tige de connexion 20 dans les broches creuses.

Sur la figure 3, la pièce de liaison 40 comprend aussi une plaque 42 de support des connecteurs de puissance 51, 52 de la batterie. Les connecteurs de puissance 51, 52 sont électriquement reliés, par sertissage par exemple, à la plaque de support 42 afin d'être électriquement reliés à la tige de connexion 20. Selon l'exemple illustré, la tige de connexion 20 et les connecteurs 51, 52 sont à la polarité négative. Bien que non illustré en détails, des connecteurs de puissance sont également prévus pour être reliés à la polarité positive de la batterie (figure 1).

Le dispositif de connexion selon l'invention permet de relier en série plusieurs modules d'accumulateurs. Une batterie de forte puissante peut ainsi être assemblée.

La figure 4 montre la connexion entre accumulateurs pour sept modules reliés en série par un dispositif selon l'invention. Tous les accumulateurs ne sont pas illustrés pour des raisons évidentes de clarté.

La figure 4 montre quelques accumulateurs 5 ainsi qu'un ensemble de type busbar pour connecter les accumulateurs dans un module. De manière connue en soi, les bornes de sortie de courant de chaque module sont reliées aux bornes de sortie de courant des accumulateurs en bout de chaîne série. La figure 4 montre des pièces de collecte de courant 30 reliées aux extrémités des broches de connexion creuses 10 et prêtes à être reliées à des bornes de sortie de courant d'accumulateurs selon un schéma électrique approprié.

La figure 5 montre deux étages d'une batterie selon l'invention comprenant deux modules prêts à être électriquement reliés en série avec le dispositif de connexion selon l'invention. Les modules M₁ et M₂ de la figure 5 ont été assemblés ; c'est-à-dire que les accumulateurs 5 de chaque module ont été reliés selon des schémas électriques appropriés. Chaque module peut être assemblé et transporté séparément puis la batterie peut être assemblée *in situ* sur son lieu d'utilisation.

A cet effet, des broches de connexion creuses 10 sont agencées entre chaque module, à des emplacements prévus lors de l'assemblage de chaque module avec des busbar (ou des câbles). La figure 5 montre une broche de connexion creuse 10 dépassant du deuxième module M2 est normalement destinée à relier en série le deuxième module M₂ à un troisième module non illustré.

Chaque extrémité des broches de connexion creuse 10 est alors électriquement reliée à une borne de sortie de courant des modules Mₙ et Mₙ₊₁ qu'elle doit relier en série. Cette connexion électrique peut se faire par vissage, brasage, soudage ou par un système de fils ou lamelles élastiques en des points appropriés des busbar de chaque module, ou par mise en butée de la broche de connexion creuse 10 dans une pièce de collecte de courant 30 préalablement agencée sur le socle de busbar du module à connecter. La mise en place de ces broches de connexion creuses se fait hors tension puisque aucun courant ne peut encore circuler entre les modules.

Une fois les broches de connexion creuses 10 mises en place entre les différents modules, la tige de connexion 20 peut être introduite dans les passages 15 de certaines broches 10 jusqu'à buter dans une pièce de connexion 30 électriquement reliée à une borne de sortie de courant du premier module. Cette pièce de connexion 30 pourra avoir été préalablement agencée sur le socle de busbar du premier module. La tige de connexion 20 peut donc être introduite en aveugle en toute sécurité.

La tige de connexion 20 présente des dimensions adaptées à la batterie qu'elle doit connecter ; notamment la distance, entre l'extrémité venant buter dans la pièce de connexion électriquement reliée à la borne de sortie de courant du premier module M₁ et la pièce de liaison 40 électriquement reliée à la borne de sortie de courant de même polarité de la batterie, est adaptée au design de la batterie.

L'invention permet donc d'obtenir une batterie de très forte puissance. Par exemple, la batterie peut présenter une tension aux bornes de l'ordre de 600 V, voir davantage, lors de la mise en place de la tige de connexion. Néanmoins, grâce au dispositif de connexion de l'invention, la mise en série des modules d'une telle batterie peut se faire aisément et en toute sécurité.

Bien entendu, la présente invention n'est pas limitée aux exemples et au mode de réalisation décrits et représentés, mais elle est susceptible de nombreuses variantes accessibles à l'homme de l'art. Notamment, la broche de connexion creuse 10 a été illustrée avec une forme cylindrique creuse, mais toute autre forme permettant de définir un passage peut être envisagée. De même, la tige de connexion 20 a été illustrée comme une tige cylindrique pleine, mais toute autre forme permettant de traverser les passages des broches creuses peut être envisagée.

## Revendications

1. Un dispositif de connexion pour relier électriquement en série au moins deux modules d'accumulateurs d'une batterie, comprenant :
- au moins une broche de connexion creuse (10) adaptée à relier électriquement deux modules adjacents (Mₙ, Mₙ₊₁) en série et définissant un passage (15) recouvert d'un isolant (11) ;
- une tige de connexion (20) adaptée à traverser le passage (15) de ladite au moins une broche de connexion creuse (10) et adaptée à relier électriquement une borne de sortie de courant d'une première polarité d'un premier module (M₁) à une borne de sortie de courant de la même polarité de la batterie.

2. Le dispositif de connexion de la revendication 1, dans lequel l'isolant (11) de la broche de connexion creuse (10) déborde aux extrémités de la broche de connexion creuse et recouvre un anneau périphérique extérieur de la broche de connexion creuse.

3. Le dispositif de connexion de la revendication 1 ou 2, dans lequel l'isolant (11) de la broche de connexion creuse (10) est une pièce isolante assemblée à la broche de connexion creuse (10).

4. Le dispositif de connexion de la revendication 1 ou 2, dans lequel l'isolant (11) de la broche de connexion creuse (10) est une couche isolante appliquée dans le passage (15) de la broche de connexion creuse (10).

5. Le dispositif de connexion de l'une quelconque des revendications précédentes, dans lequel la tige de connexion (20) est recouverte d'un isolant (21).

6. Le dispositif de connexion de la revendication 5, dans lequel l'isolant (21) de la tige de connexion (20) est d'une composition différente de l'isolant (11) de la broche de connexion creuse (10).

7. Le dispositif de connexion de la revendication 5 ou 6, dans lequel l'isolant (21) de la tige de connexion (20) est une pièce isolante assemblée à la tige de connexion (20).

8. Le dispositif de connexion de la revendication 5 ou 6, dans lequel l'isolant (21) de la tige de connexion (20) est une couche isolante appliquée sur la tige de connexion (20).

9. Le dispositif de connexion de l'une quelconque des revendications précédentes, comprenant en outre une pièce de collecte de courant (30) associée à chaque extrémité de la broche de connexion creuse (10), chaque pièce de collecte de courant (30) étant adaptée à collecter le courant depuis une borne de sortie de courant d'au moins un accumulateur (5).

10. Le dispositif de connexion de la revendication 9, dans lequel la pièce de collecte de courant présente une bague (31) en contact avec une portion conductrice de la broche de connexion creuse (10) et au moins une branche (32) adaptée à contacter électriquement une borne de sortie de courant d'un accumulateur (5).

11. Le dispositif de connexion de l'une quelconque des revendications précédentes, comprenant en outre une pièce de liaison (40) présentant :
- une bague (41) en contact électrique avec une portion conductrice (25) de la tige de connexion (20),
- une plaque (42) de support en contact électrique avec la bague (41), et
- au moins un connecteur de puissance (51, 52) agencé sur et électriquement relié à la plaque de support (42).

12. Une batterie comprenant au moins deux modules d'accumulateurs et un dispositif de connexion selon l'une des revendications 1 à 11.

13. Procédé de connexion électrique d'au moins deux modules d'accumulateurs d'une batterie, le procédé comprenant les étapes consistant à :
- agencer au moins une broche de connexion creuse (10) entre deux modules adjacents (Mₙ, Mₙ₊₁), la broche creuse définissant un passage (15) ;
- relier électriquement une première extrémité de la broche creuse (10) à une borne de sortie de courant d'une première polarité d'un premier module (Mₙ) ;
- relier électriquement la seconde extrémité de la broche creuse (10) à une borne de sortie de courant de la deuxième polarité du module adjacent (Mₙ₊₁);
- introduire une tige de connexion (20) dans le passage de ladite au moins une broche de connexion creuse ;
- relier électriquement une première extrémité de la tige de connexion (20) à une borne de sortie de courant de la deuxième polarité du premier module (M₁).

14. Le procédé de la revendication 13, dans lequel la tige de connexion (20) est introduite en aveugle dans la broche de connexion creuse (10).

15. Le procédé de la revendication 13 ou 14, dans lequel l'étape consistant à relier électriquement la première extrémité de la tige de connexion (20) comprend la mise en butée de ladite extrémité dans une pièce de connexion électriquement reliée à la borne de sortie de courant du premier module (M₁).

## Patentansprüche

1. Anschlussvorrichtung, um mindestens zwei Akkumulatormodule einer Batterie elektrisch in Reihe zu schalten, die Folgendes umfasst:
- mindestens einen Anschlusshohlstift (10), der angepasst ist, um zwei benachbarte Module (Mₙ, Mₙ₊₁) elektrisch in Reihe zu schalten, und einen mit einem Isolierstoff (11) überdeckten Durchgang (15) abgrenzt;
- einen Anschlussstift (20), der angepasst ist, um den Durchgang (15) des mindestens einen Anschlusshohlstifts (10) zu durchqueren, und angepasst ist, um eine Ausgangsklemme für Strom mit einer ersten Polarität von einem ersten Modul (M₁) mit einer Ausgangsklemme für Strom mit derselben Polarität der Batterie zu verbinden.

2. Anschlussvorrichtung nach Anspruch 1, wobei der Isolierstoff (11) des Anschlusshohlstifts (10) an den Enden des Anschlusshohlstifts vorsteht und einen äußeren Umfangsring des Anschlusshohlstifts überdeckt.

3. Anschlussvorrichtung nach Anspruch 1 oder 2, wobei der Isolierstoff (11) des Anschlusshohlstifts (10) ein isolierendes Teil ist, das mit dem Anschlusshohlstift (10) zusammengebaut ist.

4. Anschlussvorrichtung nach Anspruch 1 oder 2, wobei der Isolierstoff (11) des Anschlusshohlstifts (10) eine isolierende Schicht ist, die in dem Durchgang (15) des Anschlusshohlstifts (10) angebracht ist.

5. Anschlussvorrichtung nach irgendeinem der vorhergehenden Ansprüche, wobei der Anschlussstift (20) mit einem Isolierstoff (21) überdeckt ist.

6. Anschlussvorrichtung nach Anspruch 5, wobei der Isolierstoff (21) des Anschlussstifts (20) eine Zusammensetzung aufweist, die sich von derjenigen des Isolierstoffs (11) des Anschlusshohlstifts (10) unterscheidet.

7. Anschlussvorrichtung nach Anspruch 5 oder 6, wobei der Isolierstoff (21) des Anschlussstifts (20) ein isolierendes Teil ist, das mit dem Anschlussstift (20) zusammengebaut ist.

8. Anschlussvorrichtung nach Anspruch 5 oder 6, wobei der Isolierstoff (21) des Anschlussstifts (20) eine isolierende Schicht ist, die auf dem Verbindungsstift (20) angebracht ist.

9. Anschlussvorrichtung nach einem der vorhergehenden Ansprüche, die ferner ein Stromsammlungsteil (30) umfasst, das jedem Ende des Anschlusshohlstifts (10) zugehörig ist, wobei jedes Stromsammlungsteil (30) angepasst ist, um den Strom von einer Stromausgangsklemme von mindestens einem Akkumulator (5) zu sammeln.

10. Anschlussvorrichtung nach Anspruch 9, wobei das Stromsammlungsteil einen Ring (31), der mit einem leitfähigen Abschnitt des Anschlusshohlstifts (10) verbunden ist, und wenigstens einen Schenkel (32) aufweist, der angepasst ist, um elektrisch mit einer Stromausgangsklemme eines Akkumulators (5) in Kontakt zu sein.

11. Anschlussvorrichtung nach einem der vorhergehenden Ansprüche, die ferner ein Verbindungsteil (40) umfasst, das Folgendes aufweist:
- einen Ring (41), der elektrisch mit einem leitfähigen Abschnitt (25) des Anschlussstifts (20) in Kontakt ist,
- eine Trägerplatte (42), die elektrisch mit dem Ring (41) in Kontakt ist, und
- mindestens einen Leistungsverbinder (51, 52), der auf der Trägerplatte (42) angeordnet und elektrisch damit verbunden ist.

12. Batterie, die mindestens zwei Akkumulatormodule und eine Anschlussvorrichtung nach einem der Ansprüche 1 bis 11 umfasst.

13. Verfahren zum elektrischen Verbinden von mindestens zwei Akkumulatormodulen einer Batterie, wobei das Verfahren die Schritte umfasst, die aus Folgendem bestehen:
- Anordnen mindestens eines Anschlusshohlstifts (10) zwischen zwei benachbarten Modulen (Mₙ, Mₙ₊₁) , wobei der Hohlstift einen Durchgang (15) abgrenzt;
- elektrisches Verbinden eines ersten Endes des Hohlstifts (10) mit einer Ausgangsklemme für Strom mit einer ersten Polarität von einem ersten Modul (Mₙ) ;
- elektrisches Verbinden des zweiten Endes des Hohlstifts (10) mit einer Ausgangsklemme für Strom mit der zweiten Polarität des benachbarten Moduls (Mₙ₊₁) ;
- Einführen eines Anschlussstifts (20) in den Durchgang des mindestens einen Anschlusshohlstifts;
- elektrisches Verbinden eines ersten Endes des Anschlussstifts (20) mit einer Ausgangsklemme für Strom mit der zweiten Polarität des ersten Moduls (M₁).

14. Verfahren nach Anspruch 13, wobei der Anschlussstift (20) blind in den Anschlusshohlstift (10) eingeführt wird.

15. Verfahren nach Anspruch 13 oder 14, wobei der Schritt, der im elektrischen Verbinden des ersten Endes des Anschlussstifts (20) besteht, das Inanschlagbringen des Endes in einem Verbindungsteil umfasst, das elektrisch mit der Stromausgangsklemme des ersten Moduls (M₁) verbunden ist.

## Claims

1. A connecting device for electrically connecting at least two storage cell modules of a battery in series, comprising:
- at least one hollow connecting pin (10) adapted to electrically connect two adjacent modules (Mₙ, Mₙ₊₁) in series and defining a passage (15) covered with an insulator (11);
- a connecting rod (20) adapted to pass through the passage (15) of said at least one hollow connecting pin (10) and adapted to electrically connect a current output terminal of a first polarity of a first module (M₁) to a current output terminal of the same polarity of the battery.

2. The connection device of claim 1, wherein the insulator (11) of the hollow connecting pin (10) extends beyond the ends of the hollow connector pin and covers an outer peripheral ring of the hollow connecting pin.

3. The connection device of claim 1 or 2, wherein the insulator (11) of the hollow connecting pin (10) is an insulating part mounted on the hollow connecting pin (10).

4. The connection device of claim 1 or 2, wherein the insulator (11) of the hollow connecting pin (10) is an insulating layer applied in the passage (15) of the hollow connecting pin (10).

5. The connection device of any one of the preceding claims, wherein the connecting rod (20) is covered with an insulator (21).

6. The connection device of claim 5, wherein the insulator (21) of the connecting rod (20) is of a different composition to the insulation (11) of the hollow connecting pin (10).

7. The connection device of claim 5 or 6, wherein the insulator (21) of the connecting rod (20) is an insulating part mounted on the connecting rod (20).

8. The connection device of claim 5 or 6, wherein the insulator (21) of the connecting rod (20) is an insulating layer applied to the connecting rod (20).

9. The connection device of any preceding claim, further comprising a current collecting part (30) associated with each end of the hollow connecting pin (10), each current collecting part (30) being adapted to collect the current from a current output terminal of at least one storage cell (5).

10. The connection device of claim 9, wherein the current collecting part comprises a ring (31) in contact with a conductive portion of the hollow connecting pin (10) and at least one leg (32) adapted to electrically contact a current output terminal of a storage cell (5).

11. The connection device of any preceding claim, further comprising a linking member (40) halving:
- a ring (41) in electrical contact with a conductive portion (25) of the connecting rod (20),
- a support plate (42) in electrical contact with the ring (41), and
- at least one power connector (51, 52) arranged on and electrically connected to the support plate (42).

12. A battery comprising at least two storage cell modules and a connection device according to one of claims 1 to 11.

13. A method of electrically connecting at least two storage cell modules of a battery, the method comprising the steps of:
- arranging at least one hollow connecting pin (10) between two adjacent modules (Mₙ, Mₙ₊₁), the hollow pin defining a passage (15);
- electrically connecting a first end of the hollow pin (10) to a current output terminal of a first polarity of a first module (Mₙ);
- electrically connecting the second end of the hollow pin (10) to a current output terminal of the second polarity of the adjacent module (Mₙ₊₁);
- introducing a connecting rod (20) in the passage of said at least one hollow connecting pin;
- electrically connecting a first end of the connecting rod (20) to a current output terminal of the second polarity of the first module (M₁).

14. The method of claim 13, wherein the connecting rod (20) is introduced blind into the hollow connecting pin (10).

15. The method of claim 13 or 14, wherein the step of electrically connecting the first end of the connecting rod (20) comprises the abutment of said one end into a connection part electrically connected to the current output terminal of the first module (M₁).
